(19) Europäisches Patentamt
European Patent Office
Office européen des brevets

(11) **EP 4 432 539 A1**

(12) **EUROPEAN PATENT APPLICATION**

(43) Date of publication:
**18.09.2024 Bulletin 2024/38**

(21) Application number: **23212212.7**

(22) Date of filing: **27.11.2023**

(51) International Patent Classification (IPC):
**H02M 3/156** (2006.01)  **H02M 1/00** (2006.01)
**H02M 1/42** (2007.01)  **H02M 7/08** (2006.01)

(52) Cooperative Patent Classification (CPC):
**H02M 7/08; H02M 1/0064; H02M 1/007;**
**H02M 1/4216; H02M 1/4225; H02M 3/156;**
H02M 3/1552

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **14.03.2023 IN 202341016955**

(71) Applicant: **Goodrich Aerospace Services Private**
**Limited**
**560048 Bangalore (IN)**

(72) Inventors:
• SENGODAN, Rajkumar
**637406 Tamil Nadu (IN)**
• MAIRAL, Palash
**482002 Jabalpur (IN)**

(74) Representative: **Dehns**
**St. Bride's House**
**10 Salisbury Square**
**London EC4Y 8JD (GB)**

(54) **SYSTEMS AND METHODS FOR USING INTERPHASE TRANSFORMER WINDINGS AS BOOST CONVERTER**

(57)  A system includes a transformer (102) having a multi-phase AC input (104) and AC phase segment outputs (106, 108, 110). A plurality of rectifiers (112, 114, 116) are each connected to receive AC input from a respective one of the AC phase segment outputs (106, 108, 110). Each rectifier (112, 114, 116) has a respective positive DC output and a respective negative DC output. A first interphase transformer (IPT) (130) with a respective winding (132, 134, 136) is connected to each of the positive DC outputs of the plurality of rectifiers (112, 114,

116). The windings of the first IPT (130) are connected to an output node (138) of a positive DC power rail (140). A second IPT (142) with a respective winding (144, 146, 148) is connected to each of the negative DC outputs of the plurality of rectifiers (112, 114, 116). The windings of the second IPT (142) are connected to an output node (150) of a negative DC power rail (152). A power switch (154) is operatively connected from the positive DC power rail (140) to the negative DC power rail (152).

FIG. 1

**Description**

**BACKGROUND**

**1. Field**

The present disclosure relates to power conversion, and more particularly to AC to DC conversion such as in aircraft.

**2. Description of Related Art**

In electronic controller units (ECU's) an auto transformer splits 3-phase AC input into three AC phase segments during AC to DC conversion, where the multiple AC phase segments are phase shifted 120-degrees with respect to each other. The split 3-phase power is provided to three uncontrolled diode bridge rectifiers which output direct current to interphase transformer (IPT) windings to further reduce harmonics in the DC output voltage. The DC output voltage can still vary, particularly if the AC input power drops. This can cause issues with DC loads powered by the DC output voltage such as motors powered by power converters supplied by the DC output power.

The conventional techniques have been considered satisfactory for their intended purpose. However, there is an ever present need for improved systems and methods for power handling in AC to DC conversion and the like. This disclosure provides a solution for this need.

**SUMMARY**

A system includes a transformer having a multi-phase AC input and a plurality of AC phase segment outputs. The transformer is configured to phase shift the AC phase segment outputs so that they are phase shifted relative to one another. A plurality of rectifiers are each connected to receive AC input from a respective one of the AC phase segment outputs. Each rectifier has a respective positive DC output and a respective negative DC output. Each rectifier is configured to rectify AC from the respective one of the AC phase segment outputs into DC output to the respective positive and negative DC outputs. A first interphase transformer (IPT) with a respective winding is connected to each of the positive DC outputs of the plurality of rectifiers. The respective windings of the first IPT are connected to an output node of a positive DC power rail. A second IPT with a respective winding is connected to each of the negative DC outputs of the plurality of rectifiers. The respective windings of the second IPT are connected to an output node of a negative DC power rail. A power switch is operatively connected from the positive DC power rail to the negative DC power rail.

A controller can be operatively connected to the power switch to control switching frequency of the power switch to provide a boost mode to boost DC output voltage of the positive and negative DC power rails in an event of lowered input from the transformer. The controller can be configured to operate in a power factor correction (PFC) mode to reduce input line harmonics while in normal, i.e., steady state, operating condition. The controller can be configured to operate the power switch in pulse frequency modulation (PFM) or pulse width modulation (PWM).

The transformer can be a three-phase, phase shifting auto transformer with three outputs 120-degrees shifted from one another, wherein the plurality of rectifiers includes three rectifiers. Each of the plurality of rectifiers can be a diode bridge rectifier. A power diode can be included in the positive DC power rail, oriented to allow current to flow in a direction away from the first IPT, and to inhibit current flow in a direction into the first IPT. A DC link capacitor can be connected from the positive DC power rail to the negative DC power rail

A method of power conversion includes detecting a drop in AC input voltage supplied to a transformer below a level required to provide a target DC output voltage, rectifying AC output from the transformer with a plurality of rectifiers, filtering positive voltage output from the plurality of rectifiers with a first set of interphase transformer (IPT) windings, which output to a positive DC power rail, and filtering negative voltage output from the plurality of rectifiers with a second set of interphase transformer (IPT) windings, which output to a negative DC power rail. The method includes controlling a power switch connected from the positive DC power rail to the negative DC power rail to boost DC voltage output from the positive and negative DC power rails to at or above the target DC voltage in a boost mode of the power switch.

The method can include controlling the power switch in a power factor correction (PFC) mode to reduce input line harmonics while in normal, i.e., steady state, operating condition. The target DC output voltage can be 540 Volts across the positive and negative power rails. The method can include powering one or more loads aboard an aircraft using the DC voltage output. The method can include conditioning current in the positive DC power rail with a power diode in the positive DC power rail, oriented to allow current to flow in a direction away from the first IPT, and to inhibit current flow in a direction into the first IPT.

These and other features of the systems and methods of the subject disclosure will become more readily apparent to those skilled in the art from the following detailed description of the preferred embodiments taken in conjunction with the drawings.

## BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:

Fig. 1 is a schematic view of an embodiment of a system constructed in accordance with the present disclosure, showing the interphase transformer (IPT) windings and the power switch; and
Fig. 2 is a schematic view of the system of Fig. 1, showing the logic of the controller for operating the power switch in boost mode.

## DETAILED DESCRIPTION OF THE PREFERRED EMBODIMENTS

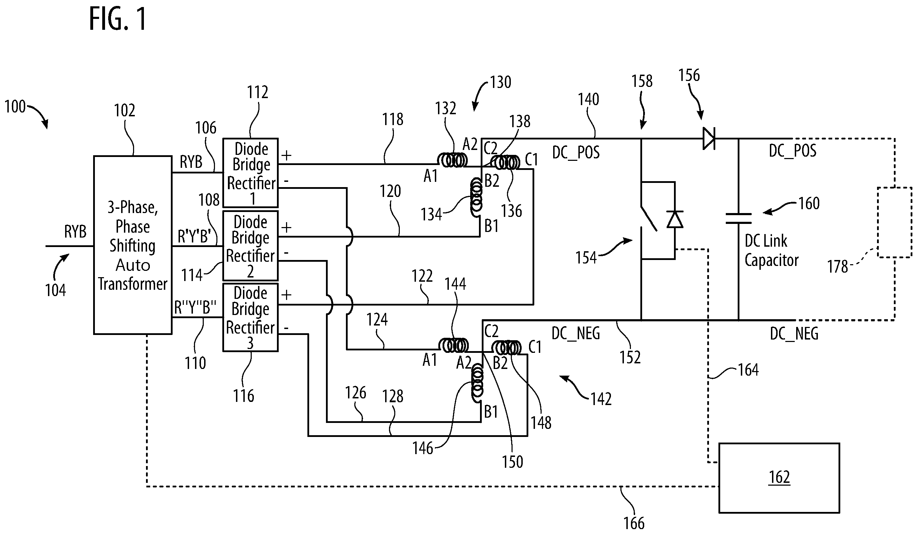

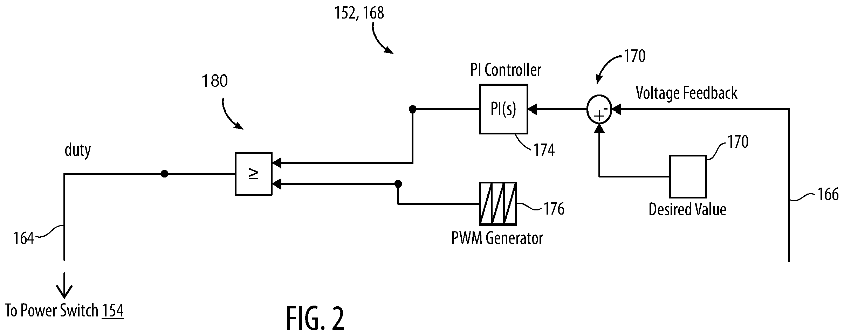

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments, or aspects thereof, are shown in Fig. 2 as will be described. The systems and methods described herein can be used to boost voltage output from an AC to DC power converter, e.g. for high voltage DC (HVDC) supplies aboard aircraft, to make up for drops in AC power supplied.
The system 100 includes a transformer 102 having a multi-phase AC input 104 and three AC phase segment outputs 106, 108, 110. The transformer 102 is configured to phase shift the AC phase segment outputs 106, 108, 110 so that they are phase shifted relative to one another. The transformer 102 is a three-phase, phase shifting auto transformer with the three segment outputs 106, 108, 110 phase shifted 120-degrees from one another.
The three segment outputs 106, 108, 110 are each connected to provide AC input to a respective one of three rectifiers 112, 114, 116. Each rectifier 112, 114, 116 has a respective positive DC output 118, 120, 122 and a respective negative DC output 124, 126, 128. Each rectifier 112, 114, 116 a diode bridge rectifier configured to rectify AC from the respective one of the AC phase segment outputs 106, 108, 110 into DC output to the respective positive and negative DC outputs 118, 120, 122, 124, 126, 128.
A first interphase transformer (IPT) 130 has three respective windings 132, 134, 136, each connected to a respective one of the the positive DC outputs 118, 120, 122 of the of rectifiers 112, 114, 116. The respective windings 132, 134, 136 of the first IPT 130 are connected to an output node 138 of a positive DC power rail 140. A second IPT 142 has three windings 144, 146, 148 respectively connected to the corresponding one of the negative DC outputs 124, 126, 128 of the rectifiers 112, 114, 116. The respective windings 144, 146, 148 of the second IPT 142 are connected to an output node 150 of a negative DC power rail 152.
A power switch 154, which can be a switching component including one or more IGBTs, MOSFETs, or the like, is operatively connected from the positive DC power rail 140 to the negative DC power rail 152. A power diode 156 is included in the positive DC power rail 140, oriented to allow current to flow in a direction away from the first IPT 130, and to inhibit current flow in a direction into the first IPT 130, for conditioning current flow in the rail 140 to flow only in the proper direction. The power diode 156 is opposite from the first IPT 130 across the power switch node 158 in the positive DC power rail 140.
A DC link capacitor 160 further along the positive DC power rail 140 than the power diode 156 is connected from the positive DC power rail 140 to the negative DC power rail 152 for dampening harmonics in the DC power output from the rails 140, 152. The IPTs 130, 142 filter voltage output from the plurality of rectifiers 112, 114, 116.
As indicated by the broken line 164 in Fig. 1, a controller 162 is operatively connected to the power switch 158, e.g. to a gate of the power switch 158, to control switching frequency of the power switch 158 to provide a boost mode to boost DC output voltage of the positive and negative DC power rails 140, 152 in an event of lowered input from the transformer 102. The controller 162 can activate the boost mode in response to any suitable sensor feedback, as indicted by the broken line 166 in Fig. 1. It is contemplated that the power switch 154 of Fig. 1 can be normally open, e.g. when the controller 162 is not operating the power switch 154 in the boost mode. However, the controller 162 can also be configured to operate the power switch 154 of Fig. 1 in a power factor correction (PFC) mode to reduce input line harmonics while in normal, i.e., steady state, operating condition. The controller 162 can operate the power switch in pulse frequency modulation (PFM) or pulse width modulation (PWM).
With reference now to Fig. 2, logic 168 for the controller 162 is explained. The input line 166 provides feedback for control, e.g. voltage feedback. This is compared with a desired value by a difference operator 170, which outputs the difference between the feedback voltage and the desired voltage 172. The difference is input for a proportional-integral (PI) controller 174, which outputs a control signal to a comparator 180, which concatenates the control signal with output from a PWM generator 176. The comparator 180 outputs the ON/OFF gate control for the duty cycling of the power switch through line 164.

With reference again to Fig. 1, if the controller 152 detects a drop in AC input voltage supplied to the transformer 102 below a level required to provide a target DC output voltage at the rails 140, 152. In an aircraft, the target DC output voltage can be 540 Volts across the positive and negative power rails 140, 152. The DC voltage output from the rails 140, 152 can provide power to one or more loads 178 aboard an aircraft.

The boost voltage provided to the rails 140, 152 in the boost mode uses the positive IPT 130 to source the boost voltage. This energy is shared and stored in the DC link capacitor 160. If 'I' is the DC load current, then $\frac{I}{3}$ will be shared by each DC output in lines 118, 120, 122. The energy stored in the inductor or winding 132 will be equal to:

$$E_1 = \frac{1}{2} L_{eq} \left(\frac{I}{3}\right)^2$$

Where,

$$L_{eq} = L_1 + L_2 \pm M_{12},$$

$L_1$ and $L_2$ are the self-inductance of coils 1 and 2, and and $M_{12}$ is the mutual inductance of coil 1 with respect to coil 2. Similarly, for other 2 DC outputs energies stored will be equal, i.e. in windings 134, 136. Total energy is

$$E = 3 * E_1 = \frac{3}{2} L_{eq} \left(\frac{I}{3}\right)^2.$$

Systems and methods as disclosed herein provide various potential benefits such as the following. The boost voltage can be implemented with the use of existing IPT windings, no additional windings are needed. DC voltage regulation is provided to the down stream load 178. Based on converter control scheme, the under voltage and phase loss protection can be implemented. The switching frequency of the power switch can be as same as in inverter switching frequency which is to be connected on the DC link. The variations in the input AC supply will not impact DC output significantly. The balance in the energy stored in the inductor and capacitor can be always maintained because of the switching. The use of IPT windings as inductors for boost conversion is suitable for DC voltage stabilization under emergency operating conditions. The input line voltage variation does not need to affect the DC output voltage significantly. The systems and method disclosed herein can be implemented into existing LRUs (line replaceable units), e.g. aboard aircraft.

The methods and systems of the present disclosure, as described above and shown in the drawings, provide for boosting voltage output from an AC to DC power converter, e.g. for high voltage DC (HVDC) supplies aboard aircraft, to make up for drops in AC power supplied. While the apparatus and methods of the subject disclosure have been shown and described with reference to preferred embodiments, those skilled in the art will readily appreciate that changes and/or modifications may be made thereto without departing from the scope of the subject disclosure.

**Claims**

1.   A system (100) comprising:

  a transformer (102) having a multi-phase AC input (104) and a plurality of AC phase segment outputs (106, 108, 110), wherein the transformer (102) is configured to phase shift the AC phase segment outputs (106, 108, 110) so that they are phase shifted relative to one another;
  a plurality of rectifiers (112, 114, 116) each connected to receive AC input from a respective one of the AC phase segment outputs (106, 108, 110), wherein each rectifier (112, 114, 116) has a respective positive DC output and a respective negative DC output, wherein each rectifier (112, 114, 116) is configured to rectify AC from the respective one of the AC phase segment outputs (106, 108, 110) into DC output to the respective positive and negative DC outputs;

a first interphase transformer, IPT (130), with a respective winding (132, 134, 136) connected to each of the positive DC outputs of the plurality of rectifiers (112, 114, 116), wherein the respective windings of the first IPT are connected to an output node (138) of a positive DC power rail (140);

a second IPT (142) with a respective winding (144, 146, 148) connected to each of the negative DC outputs of the plurality of rectifiers, wherein the respective windings of the second IPT are connected to an output node (150) of a negative DC power rail (152); and

a power switch (154) operatively connected from the positive DC power rail (140) to the negative DC power rail (152).

2. The system as recited in claim 1, further comprising a controller (162) operatively connected to the power switch (154) to control switching frequency of the power switch to provide a boost mode to boost DC output voltage of the positive and negative DC power rails (140, 152) in an event of lowered input from the transformer (102).

3. The system as recited in claim 2, wherein the controller (162) is configured to operate in a power factor correction, PFC, mode to reduce input line harmonics while in normal operating condition.

4. The system as recited in claim 2, wherein the controller (162) is configured to operate the power switch in pulse frequency modulation, PFM, or pulse width modulation, PWM.

5. The system as recited in any preceding claim, wherein the transformer (102) is a three-phase, phase shifting auto transformer with three outputs 120-degrees shifted from one another, wherein the plurality of rectifiers includes three rectifiers.

6. The system as recited in any preceding claim, wherein each of the plurality of rectifiers is a diode bridge rectifier.

7. The system as recited in any preceding claim, further comprising a power diode (156) in the positive DC power rail (140), oriented to allow current to flow in a direction away from the first IPT (130), and to inhibit current flow in a direction into the first IPT (130).

8. The system as recited in any preceding claim, further comprising a DC link capacitor (160) connected from the positive DC power rail (140) to the negative DC power rail (152).

9. A method of power conversion comprising:

detecting a drop in AC input voltage supplied to a transformer below a level required to provide a target DC output voltage;

rectifying AC output from the transformer with a plurality of rectifiers;

filtering positive voltage output from the plurality of rectifiers with a first set of interphase transformer, IPT, windings, which output to a positive DC power rail;

filtering negative voltage output from the plurality of rectifiers with a second set of interphase transformer, IPT, windings, which output to a negative DC power rail; and

controlling a power switch connected from the positive DC power rail to the negative DC power rail to boost DC voltage output from the positive and negative DC power rails to at or above the target DC voltage in a boost mode of the power switch.

10. The method as recited in claim 9, further comprising controlling the power switch in a power factor correction, PFC, mode to reduce input line harmonics while in normal operating condition.

11. The method as recited in claim 9 or 10, wherein the target DC output voltage is 540 Volts across the positive and negative power rails.

12. The method as recited in any of claims 9-11, further comprising powering one or more loads aboard an aircraft using the DC voltage output.

13. The method as recited in any of claims 9-12, wherein the transformer is a three-phase, phase shifting auto transformer with three outputs 120-degrees shifted from one another, wherein the plurality of rectifiers includes three rectifiers.

14. The method as recited in any of claims 9-13, wherein each of the plurality of rectifiers is a diode bridge rectifier.

15. The method as recited in any of claims 9-14, further comprising conditioning current in the positive DC power rail with a power diode in the positive DC power rail, oriented to allow current to flow in a direction away from the first IPT, and to inhibit current flow in a direction into the first IPT.

FIG. 1

FIG. 2

**Europäisches Patentamt**
**European Patent Office**
**Office européen des brevets**

# EUROPEAN SEARCH REPORT

Application Number

EP 23 21 2212

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/056207 A1 (SARLIOGLU BULENT [US]) 16 March 2006 (2006-03-16) * abstract * * paragraph [0001] - paragraph [0033]; figures 1-7 * | 1-15 | INV. H02M3/156 H02M1/00 H02M1/42 H02M7/08 |
| X | SEFA I ET AL: "A novel approach to determine the interphase transformer inductance of 18 pulse rectifiers", ENERGY CONVERSION AND MANAGEMENT, ELSEVIER SCIENCE PUBLISHERS, OXFORD, GB, vol. 50, no. 10, 1 October 2009 (2009-10-01), pages 2495-2503, XP026394683, ISSN: 0196-8904 [retrieved on 2009-07-12] * abstract * * sections 1-6; figures 1-13 * | 1-15 | |
| A | US 2012/091970 A1 (CHO YOUNG JIN [KR] ET AL) 19 April 2012 (2012-04-19) * abstract * * paragraph [0001] - paragraph [0102]; figures 1-7 * | 1-15 | **TECHNICAL FIELDS SEARCHED (IPC)** H02M |

-/--

The present search report has been drawn up for all claims

| Place of search | Date of completion of the search | Examiner |
|---|---|---|
| The Hague | 2 May 2024 | Adami, Salah-Eddine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

**Europäisches Patentamt**
**European Patent Office**
**Office européen des brevets**

# EUROPEAN SEARCH REPORT

**Application Number**

EP 23 21 2212

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | QIANLI SU ET AL: "Stochastic Polynomial-Chaos-Based Average Modeling of Power Electronic Systems", IEEE TRANSACTIONS ON POWER ELECTRONICS, INSTITUTE OF ELECTRICAL AND ELECTRONICS ENGINEERS, USA, vol. 26, no. 4, 1 April 2011 (2011-04-01), pages 1167-1171, XP011355374, ISSN: 0885-8993, DOI: 10.1109/TPEL.2010.2074215 * abstract * * sections I-VI; figures 1-7 * | 1-15 | |
| A | US 5 103 388 A (WILLIAMS JAMES B [US] ET AL) 7 April 1992 (1992-04-07) * abstract * * column 1 - column 8; figures 1-3 * | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 2 May 2024 | Adami, Salah-Eddine |

EPO FORM 1503 03.82 (P04C01)

## ANNEX TO THE EUROPEAN SEARCH REPORT
## ON EUROPEAN PATENT APPLICATION NO.

EP 23 21 2212

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2024

| Patent document cited in search report | | Publication date | Patent family member(s) | | Publication date |
|---|---|---|---|---|---|
| US 2006056207 | A1 | 16-03-2006 | EP 1790063 | A2 | 30-05-2007 |
| | | | US 2006056207 | A1 | 16-03-2006 |
| | | | WO 2006031966 | A2 | 23-03-2006 |
| US 2012091970 | A1 | 19-04-2012 | CN 102457097 | A | 16-05-2012 |
| | | | JP 5524040 | B2 | 18-06-2014 |
| | | | JP 2012090515 | A | 10-05-2012 |
| | | | KR 20120040515 | A | 27-04-2012 |
| | | | US 2012091970 | A1 | 19-04-2012 |
| US 5103388 | A | 07-04-1992 | NONE | | |

EPO FORM P0459

For more details about this annex : see Official Journal of the European Patent Office, No. 12/82